# EUROPÄISCHE PATENTSCHRIFT

(11) **EP 2 616 777 B1**
(45) Veröffentlichungstag und Bekanntmachung des Hinweises auf die Patenterteilung: **28.03.2018**
(21) Anmeldenummer: 11741109.0
(22) Anmeldetag: 25.07.2011
(51) Int. Cl.: G01C 21/36, G06F 3/0484, B60K 35/00, B60K 37/06

(54) **ANZEIGE- UND BEDIENVORRICHTUNG IN EINEM KRAFTFAHRZEUG**
DISPLAY AND OPERATOR CONTROL APPARATUS IN A MOTOR VEHICLE
DISPOSITIF D'AFFICHAGE ET DE COMMANDE DANS UN VÉHICULE À MOTEUR

(30) Priorität: 18.09.2010 DE 102010045974
(43) Veröffentlichungstag der Anmeldung: 24.07.2013
(73) Patentinhaber: Volkswagen Aktiengesellschaft, 38436 Wolfsburg (DE)
(72) Erfinder: KLEEBERGER, Julia (geb. Schreiber), 12161 Berlin (DE); WÄLLER, Christoph, 38106 Braunschweig (DE); SALZER, Mike, 38440 Wolfsburg (DE)
(86) Internationale Anmeldenummer: PCT/EP2011/003723
(87) Internationale Veröffentlichungsnummer: WO 2012/034615

(56) Entgegenhaltungen:
- EP-A1- 2 196 773
- EP-A2- 2 063 226
- DE-A1-102007 051 013
- DE-A1-102007 054 875
- DE-A1-102009 045 936
- Navigon Ag: "Anwenderhandbuch NAVIGON 83xx", , 1 May 2009 (2009-05-01), XP055374793, Retrieved from the Internet: URL:http://www.navigon.com/portal/common/D ownload/Manual/PNA/Navigon8310/Deutsch_man ual.pdf [retrieved on 2017-05-22]

## Beschreibung

Die Erfindung betrifft eine Anzeige- und Bedienvorrichtung in einem Kraftfahrzeug. Der Begriff "Fahrassistenzsysteme" wird im Rahmen dieser Erfindung weit verstanden. Fahrerassistenzsysteme sollen den Fahrer in allen Verkehrssituationen unterstützen und ihm ein entspanntes, stress- und unfallfreies Fahren ermöglichen. Der Begriff wird vielfach genutzt. Je nach Anwendung ist dabei zu unterscheiden zwischen Fahrerinformationssystemen (z. B. Navigation und Verkehrszustandsmeldungen), Fahrzeugkommunikationssystemen (z. B. Fahrzeug/Fahrzeug-Kommunikation oder Kommunikation zwischen Fahrzeugen und Infrastruktureinrichtungen), Fahrerassistenzsystemen zur Fahrzeugstabilisierung (z. B. Antiblockiersystem ABS, elektronisches Stabilisierungsprogramm ESP, und andere), prädiktive Fahrerassistenzsysteme, welche mit Hilfe von Rundumsichtsensoren die Fahrzeugumgebung abtasten (z. B. Einparkhilfe, Adaptive Fahrsteuerung ACC und dergleichen), sowie auch Systeme zur Erkennung des Fahrerzustands zur adaptiven Gestaltung von Warnungen und Fahrzeugeingriffen.

Die Vielzahl der bereits in heutigen Kraftfahrzeugen mitunter eingesetzten Fahrerassistenzsysteme bringt auf gattungsgemäßen Anzeige- und Bedienvorrichtungen jedoch für den Nutzer oftmals grundlegende Wechsel in der Darstellung der Informationen mit sich. Beispielsweise werden die zu Fahrerassistenzsystemen gehörenden Anzeigen und Einstellungen nicht alle in einer digitalen Navigationskarte angezeigt, sondern oftmals in einer gesonderten Umgebungsdarstellung. So existieren zumeist unterschiedliche Darstellungen des Fahrzeugumfelds im HMI (Human Machine Interface = Mensch-Maschine Schnittstelle), die unterschiedliche Informationscodierungen und Bedienprinzipien nutzen. Dies ist der Benutzerfreundlichkeit abträglich.

Aus dem Stand der Technik ist es bekannt, Informationen bzw. auswählbare Funktionen von Fahrerassistenzsystemen situationsgerecht aufzubereiten und anzuzeigen, um den Kraftfahrzeugführer weniger stark vom Verkehrsgeschehen abzulenken.

So wird beispielsweise in der DE 100 52 654 A1 ein Verfahren zur Steuerung von optischen und akustischen Informationen in einem Kraftfahrzeug beschrieben, bei dem in Abhängigkeit von Daten von Fahrerassistenzsystemen eine Fahrsituationserkennung durchgeführt wird, in dessen Abhängigkeit die optischen oder akustischen Informationen ausgegeben, verzögert, zwischengespeichert oder unterdrückt werden.

Die DE 101 53 987 A1 offenbart ein Informationssystem in einem Fahrzeug, welches die auszugebenden Informationen in Abhängigkeit vom Verhalten oder vom Zustand des Fahrers erzeugt.

In der EP 2 196 773 A1, die alle Merkmale vom Oberbegriff des Patentanspruchs 1 aufweist, ist eine Anzeige- und Bedienvorrichtung bekannt, bei der ein Benutzer in Abhängigkeit einer manuellen Einstellung eines Zoomgrades die Darstellung von unterschiedlichen bedienbaren Funktionen auf einer Anzeigeeinrichtung bewirken kann. Konkret erfolgt die Einstellung des Zoomgrades über einen Drehregler einer Eingabeeinheit. Der Benutzer kann insbesondere durch Änderung des Maßstabs (Hineinzoomen) die Umschaltung von einer Darstellung des Fahrzeugs und seiner Umgebung einerseits zu einer Darstellung von bedienbaren Fahrzeugfunktionen innerhalb der Umrissdarstellung des Fahrzeugs andrerseits bewirken. Durch Verschiebung eines Auswahlrahmens können Funktionen aus einer Funktionsgruppe angewählt und durch nachfolgende Bestätigung aufgerufen werden. Als Funktionen werden beispielsweise der Aufruf oder der Abbruch einer automatischen Einparkunterstützung, die Anzeige von Informationen über Parklücken oder über Fahrzeugzustände genannt. Ferner ist die Anzeige- und Bedienvorrichtung über eine Steuereinrichtung auch in eine Navigationseinrichtung eingebunden. Durch Änderung des Maßstabs (Herauszoomen) ist daher auch der Übergang von einer Darstellung des Fahrzeugs und seiner näheren Umgebung hin zu einer Darstellung eines Straßennetzes, in dem sich das Fahrzeug bewegt, möglich.

Ferner ist bei heutigen Navigationssystemen die digitale Karte nur mit der Funktion der Zielführung verknüpft. Bei deaktivierter Zielführung zeigt die Karte die aktuelle Position des Fahrzeugs (Fahrzeugcursor) an, bei aktiver Zielführung werden zu den Routen Hinweise eingeblendet. Es ist dabei bekannt, die Darstellung in Abhängigkeit der Route anzupassen (so genannter Kreuzungszoom).

Aktuelle Navigationssysteme erlauben zudem die Darstellung von so genannten "Points of Interest" (POIs) in der Navigationskarte, also ggf. interessierende oder markante Punkte. Um hierbei nicht zu viele POIs zugleich innerhalb eines Bildausschnitts anzuzeigen, werden diese meist in Kategorien unterteilt (z. B. Restaurants, Tankstellen etc.), die separat, z. B. über ein Menü, ausgewählt werden müssen.

Aus der EP 2 063 226 A2 ist eine Anzeige- und Bedienvorrichtung bekannt, bei der auf einem Touchscreen eines Navigationssystems neben einer Route auch interessante Orte (POIs) auf einer Karte angezeigt werden können. Die Karte ist in ihrem Zoomgrad frei wählbar. Des Weiteren können vorbestimmte Bereichsformen ausgewählt und ausgeformt werden, mit denen ein solcher Ausschnitt aus der Karte bestimmt werden kann, in dem POIs einer bestimmten Kategorie angezeigt werden sollen. Durch Drag an Drop einer bestimmten Kategorie in einen zuvor durch eine bestimmte Bereichsform umrissenen Kartenausschnitt können die in dem Gebiet des Kartenausschnitts befindlichen POIs angezeigt werden.

Der DE 10 2007 054 875 A1 ist ein Verfahren zum Betrieb einer Navigationseinrichtung entnehmbar, Insbesondere soll das Verfahren dem Anwender ermöglichen, auf einer Karte identifizierte oder nachträglich definierbare Gebiete als in sich geschlossene Kartenbereiche in eine Streckenverlaufsberechnung mit einzubeziehen. Ein Bediener hat die Möglichkeit, mittels eines Eingabemittels einen berechneten Streckenverlauf so zu bestimmen, dass dieser seinen persönlichen Bedürfnissen gerecht wird. Er kann dazu benutzerspezifische, geografische Polygontypen dem Kartenmaterial hinzufügen. Dies kann mit den Optionen derart verknüpft werden, dass beispielsweise eine berechnete Route nicht durch ein Gebiet oder entlang eines Gebietes führt, welches durch einen solchen Polygontyp definiert ist. Als Polygontypen können vom Bediener beispielsweise "Meer/Wasserfläche" oder "Gefahrgut/Wasserschutzgebiet" ausgewählt werden. Der Bediener hat die Möglichkeit, sich in bestimmten, durch Zoomen frei bestimmbaren Kartenausschnitten durch zuvor definierte Polygontypen begrenzte Gebiete anzeigen zu lassen.

Aus dem "Anwenderhandbuch Navigon 83xx" der Navigon AG, Mai 2009 (abgerufen im Internet am 22.05.2017 unter der URL:
http://www.navigon.com/portal/common/download/manual/pna/navigon8310/deutsch manual.p df) geht eine Anzeige- und Bedienvorrichtung in einem Kraftfahrzeug hervor. Diese weist zumindest einen Betriebsmodus (Karte im Modus Navigation) auf, bei dem auf der Anzeige- und Bedienvorrichtung eine Kartendarstellung erfolgt und zudem auswählbare Funktionen bzw. Funktionsgruppen angezeigt sind. Die Funktionen bzw. Funktionsgruppen umfassen beispielsweise Schaltflächen für "Optionen", "Musik", "Telefon", "Lautstärke", "Verkehrsmeldungen", "Parken" und "Ziel suchen". Bei Auswahl mancher Funktionsgruppen werden Listen mit auswählbaren Funktionen der Funktionsgruppe geöffnet, bei Auswahl der Funktionsgruppen "Verkehrsmeldungen" oder "Ziel suchen" wechselt die Anzeige auch in eine andere Kartendarstellung.

In der DE 10 2009 045936 A1 wird ein Verfahren zur Anpassung von Mensch-Maschine-Schnittstelle (MMS)-Elementen eines mobilen Gerätes an MMS-Anforderungen eines Fahrzeugs beschrieben. Konkret werden MMS-Elemente des mobilen Gerätes an ein Fahrerassistenzsystem des Fahrzeugs übertragen. Dieses prüft das MMS-Element dahingehend, ob es durch eine Authentifizierungsstelle zur Verwendung freigegeben wurde. Bei Freigabe wird das MMS-Element des mobilen Gerätes auch durch das Fahrerassistenzsystem, beispielsweise auf einem Display genutzt. Bei fehlender Freigabe verwendet das Fahrerassistenzsystem lediglich ein fahrzeugeigenes MMS-Element. Das Fahrerassistenzsystem kann neben klassischen Systemen zur Assistenz eines Fahrers auch Infotainmentfunktionen, wie Telefon, Audio, Video und Navigation enthalten.

Schließlich zeigt die DE 10 2007 051013 A1 ein Verfahren zum Betrieb eines Dialogsystems für ein Kraftfahrzeug. Das Dialogsystem dient zur Ansteuerung eines Klimasystems, eines Audiosystems, eines Navigationssystems und eines Mobiltelefons. Die Bedienung des Dialogsystems kann wahlweise durch einen Dreh-/Drücksteller oder durch frei belegbare Bedientasten erfolgen. Ein Bildschirm stellt die in Abhängigkeit eines Betriebszustandes eines anzusteuernden Systems die jeweils auslösbaren Funktionen menüartig als Liste dar. Eine Belegung der Bedientasten erfolgt in bekannter Weise durch langanhaltendes Drücken einer belegbaren Bedientaste während eine gewünschte Funktion ausgeführt wird (bspw. die Darstellung einer Kartenansicht des Navigationssystems als nord- oder fahrtweisend, Abs. 0042).

Aufgabe der vorliegenden Erfindung ist es, eine Anzeige- und Bedienvorrichtung in einem Kraftfahrzeug bereitzustellen, die hinsichtlich ihrer Benutzerfreundlichkeit verbessert ist.

Gelöst wird diese Aufgabe mit den Merkmalen von Anspruch 1. Vorteilhafte Ausführungen und Weiterbildungen der Erfindung sind den jeweiligen Unteransprüchen entnehmbar.

Die Erfindung geht aus von einer Anzeige- und Bedienvorrichtung in einem Kraftfahrzeug, welche zumindest zur Anzeige von Informationen verschiedener Fahrerassistenzsysteme und zur Auswahl von diesen Fahrerassistenzsystemen zugeordneten Funktionen nutzbar ist.

Es ist dabei durchaus möglich, dass die Anzeige- und Bedienvorrichtung auch für andere Funktionen nutzbar ist, welche nicht den Fahrerassistenzsystemen zuordenbar ist, beispielsweise Audio- oder Klimafunktionen.

Es ist nun vorgesehen, dass die Anzeige- und Bedienvorrichtung zumindest einen Betriebsmodus aufweist, in dem eine digitale Kartendarstellung mit bestimmten Darstellungsparametern angezeigt wird und dabei wenigstens eine Funktion anwählbar ist, wobei ein Wechsel hin zur Anwählbarkeit wenigstens einer anderen Funktion aktivierbar ist und dieser Wechsel zur Änderung wenigstens eines Darstellungsparameters der digitalen Kartendarstellung führt.

Somit wird auch bei einem Wechsel jeweils (ggf. gesondert über Schaltflächen angezeigter) auswählbarer Funktionen für den Nutzer eine zu Grunde liegende Basisdarstellung (digitale Karte) nicht verlassen. Lediglich ein oder mehrere Darstellungsparameter werden verändert, so dass die Darstellung für den Nutzer im Hinblick auf die auszuwählenden Funktionen optimal abgestimmt werden kann und sich der Nutzer dabei nicht an eine grundlegend andere Darstellung gewöhnen muss.

Eine gute Anpassung der Darstellung ist dann erzielbar, wenn ein Wechsel hin zur Anwählbarkeit wenigstens einer anderen Funktion zu einer Änderung des Zoom-, Neigungs- und/oder des Detaillierungsgrades der digitalen Kartendarstellung führt, wenngleich auch die Veränderung anderer Darstellungsparameter denkbar ist.

Wird beispielsweise mit der Anzeige- und Bedienvorrichtung ein Navigationssystem aktiviert, so könnten eine entsprechend anwählbare Funktion bzw. auswählbare Funktionen zur weiteren Bedienung des Navigationssystems zusammen mit einer digitalen Karte mit niedrigem Zoomgrad (als Übersichtskarte) angezeigt werden. Der Wechsel hin zur Anwählbarkeit wenigstens einer anderen Funktion könnte dann mit einer Darstellung der Karte mit hohem Zoomgrad einhergehen.

Die Einstellung des Darstellungsparameters "Zoomgrad" ist in verschiedenen Stufen möglich. Einer geringen Zoomstufe könnte beispielsweise ein Maßstab in der Kartendarstellung von 1:4.000.000 zugeordnet werden, welches auf einer Anzeigefläche der Anzeige- und Bedienvorrichtung einer Entfernung von ca. 1.200 m pro Pixel entsprechen würde. Demgegenüber kann für eine hohe Zoomstufe beispielsweise ein Maßstab von 1:2.000 in der digitalen Kartendarstellung gewählt werden, was auf der Anzeigefläche einer Entfernung von ca. 0,6 m pro Pixel entspräche.

Unter dem Darstellungsparameter "Neigungsgrad" ist der Winkel einer gedachten Kamera zu verstehen, mit dem diese aus der gewählten Höhe (Zoomgrad) die digitale Landkarte erfasst. Zoom- und Neigungsgrad stehen in der Regel in Relation zueinander. So wird ein niedriger Zoomgrad zumeist auch einen niedrigen Neigungsgrad, ein hoher Zoomgrad jedoch zumeist auch einen hohen Neigungsgrad zur Folge haben.

Der Darstellungsparameter "Detaillierungsgrad" kann sich auf Landmarken (z.B. Gebäude oder bekannte Bauwerke), Straßen und auch Gebiete beziehen. So würde ein niedriger Detaillierungsgrad beispielsweise bei Gebäuden lediglich deren schematische Darstellung und ein hoher Detaillierungsgrad deren Darstellung mit realistischer Anmutung zur Folge haben können.

Es kann jedoch durchaus vorteilhaft sein, wenn der Nutzer wenigstens einen der Anwählbarkeit von wenigstens einer Funktion jeweils zugeordneten Darstellungsparameter (insbesondere Zoom-, Detaillierungs- und/oder Neigungsgrad) einstellen kann. Dies ermöglicht eine hohe benutzerindividuelle Flexibilität.

Andererseits ist es jedoch durchaus zweckmäßig, wenn wenigstens zwei Darstellungsparameter (beispielsweise Zoom- und Neigungsgrad) in fester Beziehung zueinander stehen, derart, dass die Einstellung des einen Darstellungsparameters wenigstens die Anpassung des anderen Darstellungsparameters zur Folge hat. So kann die erfahrungsgemäß am besten geeignete Beziehung zwischen den Darstellungsparametern ausgewählt und dem System zu Grunde gelegt werden, so dass der Nutzer mit einstellbaren Parametern nicht überfrachtet wird.

Es bietet sich an, bei der Anzeige- und Bedienvorrichtung mehrere auswählbare Funktionen als Funktionsgruppe anzuzeigen, wobei wenigstens ein Wechsel zwischen der Anzeige der Funktionen bzw. zwischen der Auswählbarkeit der Funktionen zweier unterschiedlicher Funktionsgruppen möglich ist. Dies führt zu einer übersichtlichen, für den Nutzer leicht nachvollziehbaren Funktionsstruktur. So könnte beispielsweise eine zum Navigationssystem zugehörige Funktionsgruppe mit den auswählbaren Funktionen "Auswahl bereits vorhandene Routen", "Erstellung einer neuen Route", "Kombinieren von vorhandenen Routen" und "Zerteilen vorhandener Routen" versehen sein. Der Funktionsgruppe kann beispielsweise die Bezeichnung "Routenplanung" zugewiesen sein. Jede solcher Funktionsgruppen kann auch als "Interaktionsebene" verstanden werden, die immer einer Kartendarstellung überlagert bzw. zugeordnet ist und in der der Nutzer eine oder mehrere Funktionen anwählen kann.

Ein Wechsel von der Anzeige bzw. von der Auswählbarkeit der zur Funktionsgruppe "Routenplanung" gehörenden Funktionen zu solchen einer anderen Funktionsgruppe, beispielsweise "POI-Anzeige" ist durch entsprechende Bedienung der Anzeige- und Bedienvorrichtung möglich. Die Funktionsgruppe "POI-Anzeige" kann dabei beispielsweise die Funktionen "POI-Kategorie auswählen" und "POI-Detailbearbeitung" umfassen.

Ein Wechsel zwischen Funktionsgruppen bzw. Interaktionsebenen hat nun gleichzeitig die Anpassung der mit diesen verbundenen Darstellungen der digitalen Karte zur Folge. So wird beispielsweise ein Wechsel von der Funktionsgruppe "Routenplanung" hin zur Funktionsgruppe "POI-Anzeige" eine Änderung im Zoom-, Neigungs- und auch Detaillierungsgrad der Karte zur Folge haben, je nach den mit den einzelnen Funktionsgruppen jeweils verknüpften Darstellungsparametern.

Es bietet sich hierbei zweckmäßigerweise an, unterschiedliche Funktionsgruppen über diesen Funktionsgruppen jeweils zugeordnete Schalter anzeigbar zu machen. Dies ermöglicht eine schnelle Auswahl der jeweiligen Funktionsgruppen.

Dabei sind als ein Merkmal der Erfindung die den Funktionsgruppen zugeordneten Schalter zusätzlich auch als frei belegbare Favoriten-Tasten ausgebildet. Dies ermöglicht einen besonders schnellen Zugang zu vom Nutzer bevorzugten Funktionsgruppen, ohne dass der Nutzer sich durch eventuelle Menüs hindurchhangeln muss.

Es bietet sich an, dass bei der Anzeige- und Bedienvorrichtung wenigstens eine berührungsempfindliche Oberfläche vorgesehen ist, auf der die den Funktionsgruppen zugeordneten Schalter durch Betätigung einer Menü-Taste darstellbar und durch Berührung aktivierbar sind. Die berührungsempfindliche Oberfläche kann vorzugsweise als so genannter Touchscreen ausgebildet sein. Auf diese Weise ist eine sehr komfortable Bedienung der Anzeige- und Bedienvorrichtung möglich. Während die den Funktionsgruppen zugeordneten Schalter quasi als "Softkeys" auf dem Touchscreen abgebildet sind, ist die Menü-Taste vorzugsweise als "echte", hardwaremäßig ausgebildete Taste ausgebildet.

Wie bereits erwähnt, kann eine Auswahl der Funktionsgruppen bzw. Interaktionsebenen auch über die frei belegbaren Favoriten-Tasten erfolgen. Eine entsprechende Belegung dieser Favoriten-Tasten erfolgt durch eine "Drag&Drop"-Funktion, indem man den Finger auf den Schalter einer Funktionsgruppe hält und diesen an die zu belegende Favoriten-Taste heranführt.

Die jeweils konkret auswählbaren Funktionen einer Funktionsgruppe können nach Aktivierung der den Funktionsgruppen zugeordneten Schalter durch auf der berührungsempfindlichen Oberfläche dargestellte Schaltflächen aktivierbar sein.

Zudem kann zweckmäßigerweise ein Schalter vorgesehen sein, bei deren Betätigung lediglich eine Darstellung der digitalen Karte ohne überlagerte, auswählbare Funktionen einer Funktionsgruppe erfolgt. Dieser Schalter kann als Softkey und/oder auch als hardwaremäßig ausgewählter Schalter ausgebildet sein. Hierdurch wird dem Nutzer bei Bedarf schnell ermöglicht, sich auf der Anzeige- und Bedienvorrichtung quasi eine "Basis-Kartendarstellung" anzeigen zu lassen.

Weitere Vorteile und Ausgestaltungen der Erfindung werden anhand eines bevorzugten Ausführungsbeispiels deutlich, was mit Hilfe der beiliegenden Figuren näher erläutert werden soll. Dabei bedeuten
- Fig. 1: eine prinziphafte Draufsicht auf ein erfindungsgemäßes Anzeige- und Bedienungsgerät,
- Fig. 2: eine Ansicht vergleichbar mit Fig. 1, wobei auf der Anzeigefläche ein Menü zur Auswahl verschiedener Funktionsgruppen angezeigt wird,
- Fig. 3: eine prinziphafte Darstellung eines wesentlichen Funktionsprinzips der erfindungsgemäßen Anzeige- und Bedienvorrichtung,
- Fig. 4: eine beispielhafte, tabellarische Darstellung für die mögliche Abstufung eines Darstellungsparameters (Zoomgrad),
- Fig. 5: eine tabellarische Darstellung für die mögliche Abstufung eines zweiten Darstellungsparameters (Neigungsgrad),
- Fig. 6: eine tabellarische Darstellung für die mögliche Abstufung eines weiteren Darstellungsparameters (Detaillierungsgrad),
- Fig. 7: eine beispielhafte Darstellung einer mit einer bestimmten Funktionsgruppe (Interaktionsebene) verbundenen digitalen Karte und
- Fig. 8: eine beispielhafte Darstellung einer mit einer anderen Funktionsgruppe verbundenen digitalen Karte.

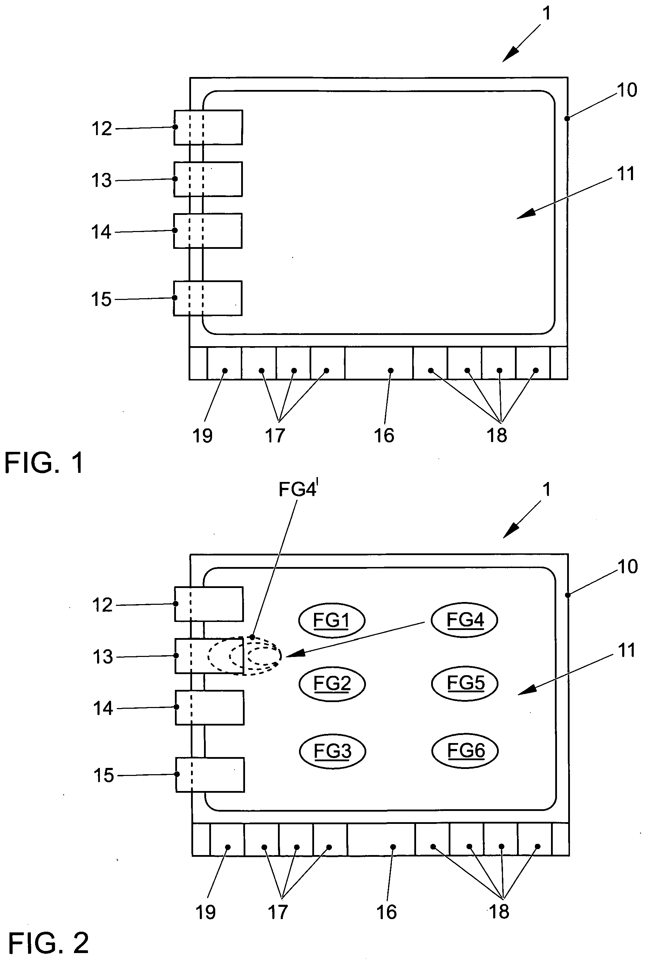

Es wird zunächst auf die Fig. 1 und 2 Bezug genommen. So ist in Fig. 1 eine Anzeige- und Bedienvorrichtung 1 ersichtlich, welche in ein nicht näher dargestelltes Kraftfahrzeug eingebaut ist. Bevorzugter Einbauort kann beispielsweise im Bereich der Mittelkonsole oder der Instrumententafel des Kraftfahrzeugs sein. Die Anzeige- und Bedienvorrichtung 1 steht in signalleitender, logischer Verbindung mit diversen Fahrer-Assistenzsystemen, insbesondere mit einem Navigationssystem, einem Fahrzeugkommunikationssystem, einer Park- und Einparkhilfe, sowie einem Kollisionswarnassistenten. Die signalleitende, logische Verbindung soll im Detail nicht näher erläutert werden, weil diese für das Verständnis der Erfindung nicht wesentlich ist.

Die Anzeige- und Bedienvorrichtung 1 weist ein Gehäuse 10 auf, welches an seiner linken Seite mit in ihrer Funktion frei belegbaren Favoritentasten 12, 13 und 14 versehen ist. Unter der Favoritentaste 14 ist eine Default-Taste 15 vorgesehen. Die Tasten 12 bis 15 sind als Kippschalter und transparent ausgebildet, wobei die Schalter 12 bis 15 mit einem Großteil ihres Körpers über einer berührungsempfindlichen Oberfläche 11 in Form eines Touchscreens positioniert sind.

Im unteren Bereich des Gehäuses 10, und zwar unterhalb des Touchscreens 11 ist mittig eine Menü-Taste 16 angeordnet, wobei linksseitig zu dieser Audio-Tasten 17 für Radiofunktionen und rechtsseitig von dieser Audio-Tasten 18 für CD- und Aux-Funktionen angeordnet sind. Ferner ist ein Netzschalter 19 zum An- und Ausschalten der Anzeige- und Bedienvorrichtung 1 ersichtlich.

Im eingeschalteten Zustand der Anzeige- und Bedienvorrichtung 1 ist über die Menütaste 16 ein Menü auf dem Touchscreen 11 anzeigbar, in dem für den Nutzer verfügbare Funktionsgruppen FG1 bis FG6 ersichtlich sind (vgl. Fig. 2). Jede der Funktionsgruppen FG1 bis FG6 umfasst wenigstens eine Funktion, in der Regel jedoch mehrere Funktionen, welche themenspezifisch einem Fahrerassistenzsystem zugeordnet werden können.

Den Funktionsgruppen FG1 bis FG6 sind auf dem Touchscreen 11 als dargestellte Schaltflächen im Klartext (auch dargestellte Symbole sind denkbar) folgende Themen zugeordnet:
FG1 = Routenplanung, FG2 = POI-Anzeige, FG3 = Parken, FG4 = temporäre Ereignisse, FG5 = unmittelbares Fahrzeugumfeld, FG6 = Favoritenkarte.

Sollten darüber hinaus Funktionsgruppen existieren bzw. notwendig sein, so können diese leicht über eine an sich bekannte Scroll- oder Blätterfunktion anzeigbar sein.

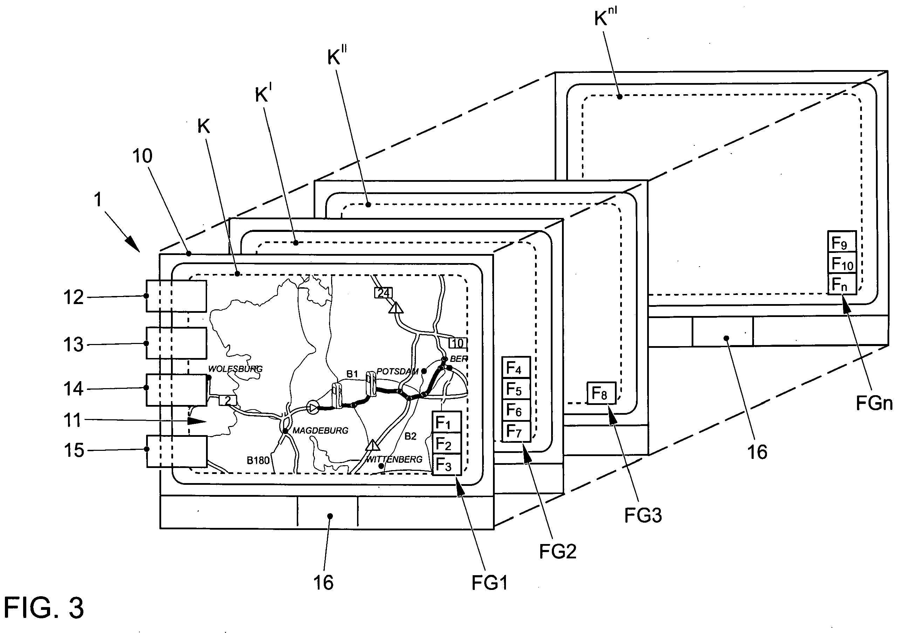

Wählt nun der Nutzer eine der Funktionsgruppen FG1 bis FG6 durch Berührung des entsprechenden Menüpunktes aus, so wechselt die Ansicht in eine andere Darstellung, was in der prinzipiellen Funktionsweise nun anhand von Fig. 3 näher erläutert werden soll.

Fig. 3 zeigt durch den seitlichen Versatz angedeutet unterschiedliche Bildschirmdarstellungen an, wie sie bei Anwahl einer der Funktionsgruppen FG1 bis FG6 auf dem Touchscreen 11 der Anzeige- und Bedienvorrichtung 1 erscheinen. Der Übersichtigkeit halber sind die mit Audiofunktionen belegten Taster 17 und 18 sowie der Netzschalter 19 nicht mehr dargestellt.

Berührt nun der Nutzer aus dem Menü (vergleiche Fig. 2) eine der als Schaltflächen abgebildeten Funktionsgruppen, so erscheint in Abhängigkeit der ausgewählten Funktionsgruppe auf dem Touchscreen 11 eine der Darstellungen K bis K^{n'} der digitalen Karte zusammen mit den einer Funktionsgruppe zugeordneten, auswählbaren bzw. aktivierbaren Funktionen F1 bis Fn, welche in Form von Schaltflächen dargestellt sind. Die Kartendarstellungen K bis K^{n'} unterscheiden sich jeweils im Wert wenigstens einer ihrer Darstellungsparameter, also beispielsweise im Zoomgrad, im Neigungsgrad und/oder im Detaillierungsgrad.

Da es, wie bereits erwähnt, durchaus möglich ist, dass mehr als die dargestellten sechs Funktionsgruppen FG1 und FG6 abrufbar sind, ist dies in der Fig. 3 durch die Variable N (vgl. Kⁿ', FGn und Fn) angedeutet.

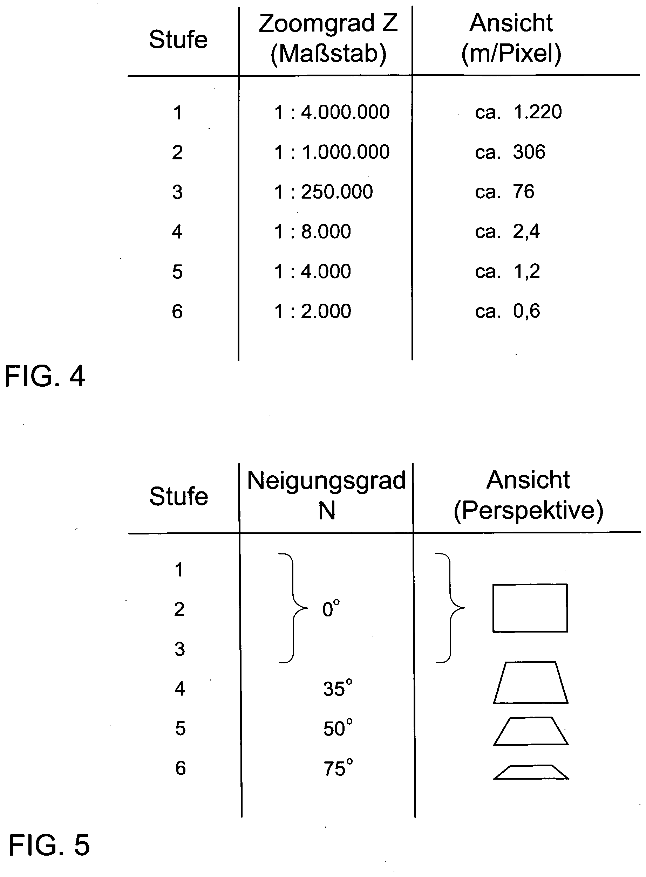

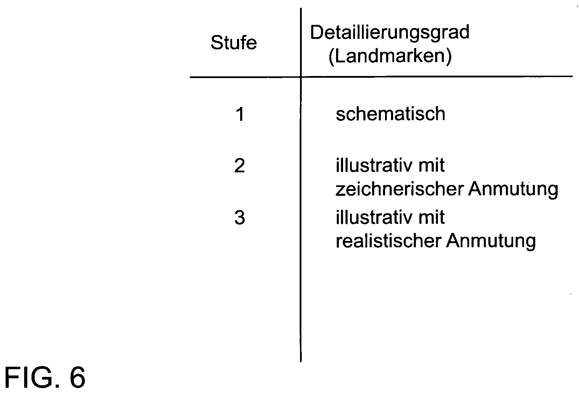

Wird beispielsweise die Funktionsgruppe bzw. Interaktionsebene FG1 ausgewählt, so erscheint eine digitale Karte K, welcher bestimmte Darstellungsparameter zugeordnet sind. Die wesentlichen Darstellungsparameter sind hierbei ein bestimmter Zoomgrad Z (vergleiche Fig. 4), ein bestimmter Neigungsgrad N (vergleiche Fig. 5) und ein bestimmter Detaillierungsgrad D (vergleiche Fig. 6). Auf die einzelnen Darstellungsparameter soll später noch eingegangen werden.

Zusammen mit der digitalen Karte K werden nun auf dem Touchscreen 11 die der Funktionsgruppe FG1 (Routenplanung) zugewiesenen, auswählbaren Funktionen F1 bis F3 als Schaltflächen dargestellt. So ist beispielsweise die Belegung der Schaltflächen F1 bis F3 mit den Funktionen F1 = Route erstellen, F2 = Routen betrachten und F3 = Vorschau Zielort denkbar. Bei Auswahl der Funktion F1 ist es möglich, neue Routen durch eigene Fingerbewegungen direkt auf dem Touchscreen einzuzeichnen. Dabei kann beispielsweise vorher mit einem der Funktion F1 zugeordneten Kontextmenü abgefragt worden sein, ob eine neue Route alphanumerisch durch Eingabe von Start- und Zielort oder durch die besagte Einzeichnung auf der Karte K selbst erfolgen soll.

Bei der Anwahl der Funktion F2 ist denkbar, dass eine bestimmte (gegebenenfalls festlegbare) Anzahl vorher abgefahrener Routen (graphisch unterscheidbar) dargestellt sind, wobei einzelne Routen durch entsprechende Berührung auswählbar sind. Bei Auswahl einer Route ist wiederum die Anzeige eines Kontextmenüs denkbar mit den Funktionen "weiterführende Informationen" (Streckenbeschaffenheit, Unterschiede in Zeit und Verbrauch zu anderen Routen, etc.), "als neue Route übernehmen" oder auch "Route bearbeiten". Hierfür kann wiederum die Möglichkeit gegeben werden, eine Route beliebig zu zerteilen und eine oder mehrere Teilstrecken als neue Route zu übernehmen. Es kann ferner denkbar sein, dass im erwähnten Kontextmenü eine weiterführende Funktion "Routen zusammenfügen" angeboten wird, bei dem durch eigene Fingerbewegungen insbesondere auf der Karte K nahe zusammenliegende Routen ausgewählt und als neue Navigationsroute übernommen werden. Selbstverständlich ist es möglich, dass vorher ein sinnvoller Vorschlag vom Navigationssystem beispielsweise graphisch angezeigt wird.

Bei Auswahl der Funktion F3 wird lediglich das Zielgebiet angezeigt, wobei zusätzlich eine Anzeige von lokalen Wetterinformationen denkbar ist.

Als zusätzliche Anzeige in der Karte K sind folgende Anzeigen sinnvoll:
- Alternative Routen (schnellste, ökonomischste, sicherste, komfortabelste)
- Verkehrsbehinderungen
- Verkehrsdichte
- Reichweite (Tankfüllung bzw. Batteriestand bei E-Fahrzeugen)

Wie bereits erwähnt, ist jeder auswählbaren Funktionsgruppe FG1 bis FGn entsprechend eine der Karten K bis K^{n'} zugeordnet, deren Darstellungsparameter Zoomgrad Z, Neigungsgrad N und Detaillierungsgrad D bestimmte Werte aufweist. Mögliche einstellbare Werte sollen nun anhand der Fig. 4 bis 6 näher erläutert werden.

So ist im Ausführungsbeispiel ein Zoomgrad Z mit den Abstufungen 1 bis 6 vorgesehen, wobei die Stufe 1 den niedrigsten Zoomgrad (Maßstab 1:4.000.000) und die Stufe 6 den höchsten Zoomgrad (Maßstab 1:2.000) aufweist. Der Stufe 1 entspricht dabei eine Ansicht auf dem Touchscreen 11 von ungefähr 1.220 Meter pro Pixel, der Stufe 6 hingegen eine Ansicht von ca. 0,6 Meter pro Pixel. Die Zwischenwerte sind der entsprechenden Tabelle aus Fig. 4 zu entnehmen.

Auch für den Neigungsgrad N sind im Ausführungsbeispiel sechs Stufen vorgesehen (vergleiche Fig. 5). Der Neigungsgrad entspricht hierbei einem gedachten Kamerawinkel einer in Vogelperspektive positionierten Kamera. So entsprechen die Neigungsstufen 1 bis 3 einem Neigungsgrad von 0 Grad. Der Stufe 6 ist hingegen ein Neigungsgrad von 75 Grad zugeordnet, wobei in der rechten Spalte der Tabelle jeweils die dem Neigungsgrad entsprechende perspektivische Verzerrung angedeutet ist.

In der Fig. 6 ist schließlich der Detaillierungsgrad D beispielhaft für Landmarken dargestellt. Landmarken können lokale Marken, also einzelne Gebäude einer Straße oder auch globale Landmarken (markante bzw. bekannte Bauwerke) sein, beispielsweise der Braunschweiger Löwe, das Berliner Brandenburger Tor oder der Pariser Eiffelturm, welche als Sinnbild für Städte verwendbar sind.

Wie ersichtlich sind drei Stufen für den Detaillierungsgrad für Landmarken vorgesehen. So sind Landmarken bzw. Gebäude in der Stufe 1 lediglich schematisch als Strichzeichnungen dargestellt, während sie in Stufe 2 bereits illustrativ mit zeichnerischer Anmutung dargestellt sind. Hier sind beispielsweise die Dachflächen dunkler dargestellt als die Wandflächen eines Gebäudes. In der Stufe 3 erfolgt eine illustrative Darstellung mit realistischer Anmutung. Hierbei sind zusätzlich beispielsweise einzelne Stockwerke und Fenster der Gebäude ersichtlich. Der Detaillierungsgrad D ist hier nur beispielhaft für Landmarken dargestellt, er bezieht sich aber auch auf Straßen und Gebiete, wobei der Detaillierungsgrad bei Straßen im Wesentlichen in deren Strichstärke sowie deren Farbe und der Detaillierungsgrad bei Gebieten im Wesentlichen hinsichtlich der Textur deren Darstellung variiert werden kann.

Es sei angemerkt, dass sich insbesondere zwischen dem Zoomgrad Z und dem Neigungsgrad N (Perspektive) eine bestimmte Relation als vorteilhaft für die Darstellung erwiesen hat. Diese Relation ist im Ausführungsbeispiel daher vom System zunächst vorgegeben, kann bei Bedarf vom Nutzer jedoch auch eingestellt werden.

So weisen sowohl Zoomgrad Z als auch Neigungsgrad N jeweils sechs Stufen auf, wobei bei einer Kartendarstellung eine eingestellte Stufe 1 im Zoomgrad Z die Werte der Stufe 1 vom Neigungsgrad N zugeordnet sind. Der Stufe 2 im Zoomgrad Z sind die Werte von Stufe 2 des Neigungsgrades N zugeordnet usw.

Bei ausgewählter Funktionsgruppe FG1 (Routenplanung) sind der digitalen Karte K nun die Darstellungsparameter Zoomgrad Z = 1 und Neigungsgrad N = 1 zugeordnet.

Für die Anwahl einer anderen Funktionsgruppe (Interaktionsebene) hat der Nutzer nun folgende Möglichkeiten:
a) Durch Betätigung der Menütaste 16 gelangt der Nutzer wieder zur Menüdarstellung (vergleiche Fig. 2). Aus diesem Menü kann er in bereits beschriebener Weise eines der Funktionsgruppen FG1 bis FG6 auswählen.
b) Der Nutzer kann eine der mit jeweils einer bevorzugten bzw. oft verwendeten Funktionsgruppe belegten Favoritentasten 12 bis 14 betätigen und gelangt so unmittelbar zu einer anderen Funktionsgruppe. Hierzu muss er jedoch vorher aus dem Menü (vergleiche Fig. 2) die Favoritentasten 12 bis 14 mit einer entsprechenden Funktionsgruppe belegt haben. Dies ist durch eine einfache so genannte "Drag&Drop"-Funktion möglich, wie in Fig. 2 durch den Pfeil angedeutet. So braucht der Nutzer mit einem Finger beispielsweise lediglich das Symbol bzw. den Klartext der Funktionsgruppe FG4 an den Rand der mit dieser Funktionsgruppe zu belegenden Favoritentaste, beispielsweise Favoritentaste 13, zu verschieben (vgl. FG4'). Bei Unterschreiten eines definierten Abstands zu dieser Taste wird das Symbol bzw. der Klartext automatisch "unter" die entsprechende Favoritentaste gelegt und ist durch die transparent ausgestaltete Favoritentaste hindurch erkennbar. Das bisher gegebenenfalls an dieser Position angezeigte Symbol verschwindet oder wandert beispielsweise an die ursprüngliche Position des vom Nutzer verschobenen Symbols in der Menüdarstellung zurück.

Durch die Favoritentasten 12 bis 14 ist somit ein äußerst schneller Wechsel zumindest zwischen ausgewählten Funktionsgruppen der Funktionsgruppen FG1 bis FG6 möglich. Zwar sind im Ausführungsbeispiel nur drei solcher Favoritentasten 12 bis 14 dargestellt, es ist natürlich jedoch bedarfsweise auch eine andere Anzahl solcher Favoritentasten denkbar.

Wählt der Nutzer, beispielsweise ausgehend von der Funktionsgruppe FG1 über eine der Favoritentasten 12 bis 14 die Funktionsgruppe FG2 an, so erfolgt eine Veränderung wenigstens eines Darstellungsparameters (Zoomgrad Z, Neigungsgrad N und/oder Detaillierungsgrad D) zu einer digitalen Karte K'. Gleichzeitig werden auf dem Touchscreen 11 auswählbare Funktionen F4 bis F7 angezeigt. Die Funktionsgruppe FG2 ist mit Funktionen zur POI-Anzeige (POI = Point of Interest) belegt. Konkret ist hier der Zoomgrad Z in den Stufen 4, 5 oder 6 vorgesehen. Entsprechend damit einhergehend ist auch ein Neigungsgrad N in den Stufen 4, 5 oder 6. Die Funktionen F4 bis F7 sind wiederum als entsprechende Schaltflächen ausgebildet und durch Berührung auswählbar. Bei Auswahl einer Funktion ist jeweils möglich, dass sich bei Berührung ein Kontextmenü mit weiteren Unterfunktionen öffnet.

So kann die Funktion F4 beispielsweise mit der Funktion "Auswahl POI-Kategorie" belegt sein. Berührt man die Schaltfläche so öffnet sich ein Kontextmenü mit auswählbaren POI-Kategorien, beispielsweise Handel (Geschäfte und Dienstleistungen), Mobilität (Fahrzeug, Flughafen, Schifffahrt, Bahnhöfe, Unterkunft, etc.), Freizeit (Sport, Erholung, Kunst, Kultur, Ausgehen, etc.), Einrichtungen (öffentliche, religiöse, Post, Geld, Telefonie, Gesundheitswesen, etc.) sowie Essen und Trinken (Restaurants, Cafes, Kneipen, Bars, Imbisse, Eisdielen, etc.).

Es kann unter Umständen, beispielsweise bei Notfällen, sehr zweckmäßig sein, wenn eine der auswählbaren Funktionen F4 bis F7 oder bei Bedarf eine weitere, hinzuzufügende Schaltfläche als "Notfalltaste" ausgebildet ist, bei der (ohne über die POI-Kategorienauswahl gehen zu müssen) unmittelbar eine Anzeige von Krankenhäusern und/oder Ärzten als POI erfolgt. In entsprechender Weise ist es denkbar, eine hardwaremäßig ausgebildete Taste (vergleichbar mit den Favoritentasten 12 bis 14 bzw. der Default-Taste 15) mit einer solchen Funktion fest zu belegen.

Es sei angemerkt, dass auch die auf der Karte K' angezeigten POIs Schaltflächen darstellen, die über Berührung auf dem Touchscreen 11 auswählbar sind. Bei Berührung öffnet sich ein entsprechendes Kontextmenü, welches beispielsweise die Punkte "weiterführende Informationen", "als Navigationsziel übernehmen", "ähnliche POIs anzeigen", "Kommentar hinterlassen" oder "für Favoritenkarte markieren" beinhalten kann.

Um einen Kommentar auch für andere Verkehrsteilnehmer hinterlassen zu können, setzt die Funktion "Kommentar hinterlassen" natürlich ein entsprechendes Fahrzeugkommunikationssystems (car to car Communication) voraus, mit welchem die Anzeige- und Bedienvorrichtung 1 in signaltechnischer bzw. logischer Verbindung steht.

Wird ein POI "für die Favoritenkarte markiert", so wird dieses POI zusätzlich zu anderen Informationen bei Anwahl der Funktionsgruppe FG6 (Favoritenkarte), welche weiter unten noch beschrieben wird, grundsätzlich dargestellt.

In der Funktionsgruppe FG2 sind natürlich noch zusätzliche Anzeigen denkbar, so z. B.:
- wo sind viele Menschen unterwegs?
- wo sind meine Freunde?
- wo sind Menschen mit ähnlichen Interessen?
- Stimmungsbarometer
- Wetter
- interessante Routen
- Geheimtipps
- Graffitikunstwerke
- und Ähnliches

Auch derartige, zusätzliche Anzeigen können als POIs auf der Karte darstellbar und auswählbar sein mit entsprechend bereits beschriebenen Kontextmenüs.

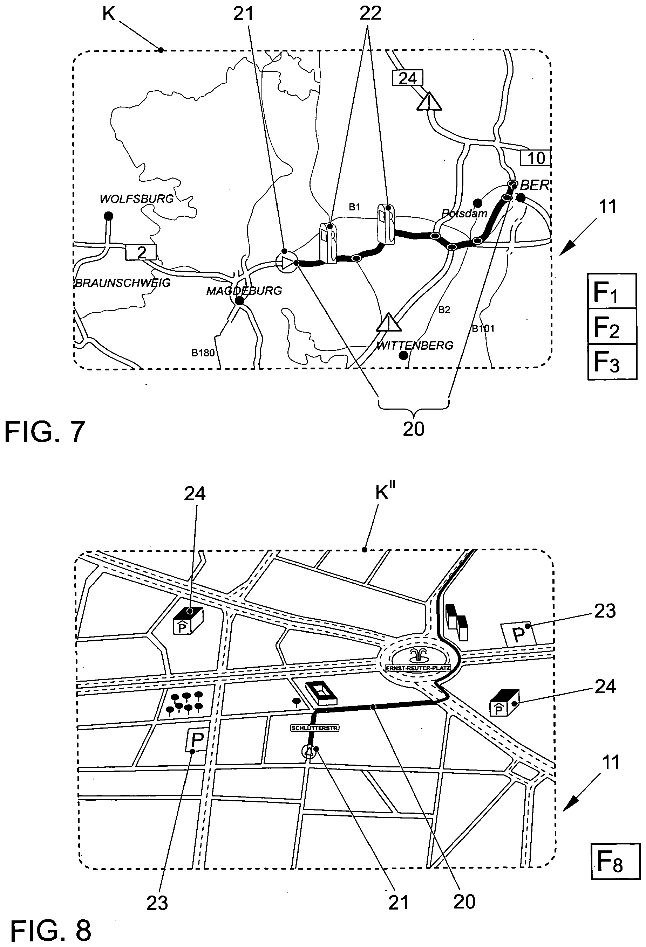

Bei Auswahl der Funktionsgruppe FG3 (Parken) aus dem Menü (vergleiche Fig. 2) oder durch eine der Favoritentasten 12 bis 14 führt dieser Wechsel wiederum zur Änderung wenigstens eines Darstellungsparameters der digitalen Kartendarstellung. So wird zusammen mit der Funktionsgruppe FG3 eine digitale Karte K" mit einem Zoomgrad Z in der Stufe 5 oder auch 6 dargestellt. Damit einhergehend erfolgt eine perspektivische Darstellung mit einem Neigungsgrad N in der Stufe 5 oder 6. Es wird also im Gegensatz zur Übersichtsdarstellung bei Auswahl der Funktionsgruppe FG1 (Routenplanung, vgl. Fig. 7) bei einer Anwahl der Funktionsgruppe FG3 die unmittelbare Umgebung des Fahrzeugs dargestellt. Zusätzlich erfolgt die Anzeige von in der Umgebung vorhandenen Parkplätzen 23 bzw. Parkhäusern 24 (vgl. Fig. 8).

Es sei angemerkt, dass die zusammen mit einer der Kartendarstellungen K bis K^{n'} jeweils auswählbaren Funktionen nicht unbedingt explizit als Schaltflächen nach Art der Funktionen F1 bis Fn dargestellt sein müssen, sondern dass es auch möglich ist, derartige Funktionen durch Berührung entsprechender Symbole der Karte selbst auswählbar zu gestalten. So sind in der digitalen Karte K" die angezeigten Parkhäuser 24 bzw. Parkplätze 23 direkt als Schaltfläche auf dem Touchscreen 11 anwählbar. Bei Berührung öffnet sich ein Kontextmenü mit auswählbaren Funktionen, wie bspw. "zum ausgewählten Parkplatz navigieren", "Entfernung zum Zielort". Wie bereits beschrieben, können auch angezeigte Straßen der Karte K mit Funktionen belegt und daher im Grunde genommen als auswählbare Funktionen verstanden werden.

Zusätzlich ist denkbar, eine Funktion F8 (freie Parkplätze suchen) als Schaltfläche zur Auswahl anzuzeigen. Bei Auswahl dieser Funktion werden lediglich Parkhäuser 24 bzw. Parkplätze 23 mit momentan als frei registrierten Parkstellen auf der Karte K" angezeigt. Bei Berührung eines Parkhauses 24 bzw. eines Parkplatzes 23 erfolgt in analoger Weise die Anzeige eines Kontextmenüs mit der Anzeige einer zusätzlichen Funktion "Parkplatz reservieren/buchen".

Wählt der Nutzer die Funktionsgruppe FG5 (unmittelbares Fahrzeugumfeld) so ist auch hier der Funktionsgruppe ein bestimmter, voreingestellter Wert der Darstellungsparameter (Zoomgrad Z, Neigungsgrad N sowie Detaillierungsgrad D) der digitalen Karte zugeordnet. Vorzugsweise erfolgt bei Anwahl der Funktionsgruppe FG5 die Darstellung der digitalen Karte mit einem Zoomgrad Z in der Stufe 6 oder einer noch höheren Zoomstufe, in welcher das direkte Fahrzeugumfeld abgebildet werden kann. Hierbei sind als zusätzliche Anzeigen die Reichweite der Fahrzeugsensoren, Straßenmarkierungen, Fahrzeugmanöver sowie die Anzeige von Gegenverkehr denkbar. Zusätzlich ist als auswählbare Funktion bzw. Schaltfläche eine Einstellung der Sensor-Automatikstufe, d. h. also der von den Sensoren zu überwachenden Reichweite denkbar.

Bei Auswahl der Funktionsgruppe FG4 (temporäre Ereignisse) kann wiederum eine Kartendarstellung mit Zoomgraden Z in den Stufen 4, 5 oder 6 erfolgen. Zusätzlich kann die Anzeige von temporären Ereignissen (beispielsweise Open Air Konzerte, Sportwettkämpfe, Demonstrationen, etc.) auf der Karte erfolgen, wobei die Ereignisse wiederum als Schaltflächen über Berührung auf dem Touchscreen 11 auswählbar sein können. Auch hier wäre bei Berührung die Einblendung eines Kontextmenüs, beispielsweise mit den Funktionen "weiterführende Informationen" (beispielsweise Anzeige des Zeitraums der Aktualität), "als Navigationsziel übernehmen", "ähnliche POIs anzeigen", "Kommentar hinterlassen" oder auch "für Favoritenkarte markieren" sinnvoll.

Bei Anwahl schließlich der Funktionsgruppe FG6 (Favoritenkarte) wird dem Nutzer eine digitale Karte mit all denjenigen Kartenelementen angezeigt, die in Zusammenhang mit anderen Funktionsgruppen (Interaktionsebenen) ggf. für die Favoritenkarte markiert wurden (s.o.).

Als Schaltflächen bzw. Funktionen ist es dabei denkbar, dem Nutzer die Möglichkeiten zu geben, das Aussehen (beispielsweise Farbe) der Karte zu ändern oder neue, eigene Objekte hinzuzufügen (mit der Option, diese in die anderen Kartendarstellungen der anderen Funktionsgruppen zu übernehmen). Ferner können Elemente priorisiert und damit auffälliger in der Darstellung gestaltet werden. Des Weiteren wäre denkbar, eigens generierte POIs anderen Verkehrsteilnehmern zukommen zu lassen (entsprechendes Fahrzeugkommunikationssystem vorausgesetzt).

In den Fig. 7 und 8 sollen nunmehr exemplarisch mögliche Kartendarstellungen K und K" dargestellt werden, die in Zusammenhang mit den Funktionsgruppen bzw. Interaktionsebenen FG1 und FG3 erfolgen.

So sind in Fig. 7 die Darstellungen einer eigenen Zielroute 20 (dunkel hinterlegt), eines Cursors 21 vom eigenen Fahrzeug sowie von Tankstellen 22 ersichtlich. Die Darstellung der Karte K erfolgt mit einem Zoomgrad Z der Stufe 1 und einem Neigungsgrad N der Stufe 1. Entsprechend einhergehend ist ein niedriger Detaillierungsgrad D. Im Bereich der digitalen Karte K sind die auswählbaren Funktionen F1 bis F3 auf dem Touchscreen 11 angezeigt.

In der Fig. 8 ist eine Kartendarstellung K" mit dem Zoomgrad Z in der Stufe 5 und einem Neigungsgrad N in der Stufe 5 ersichtlich. Der Detaillierungsgrad D für die Landmarken erfolgt in der Stufe 2. Wiederum ist der Cursor 21 des eigenen Fahrzeugs und die eigene Zielroute 20 ersichtlich. Ferner sind in der unmittelbaren Umgebung vorhandene Parkplätze 23 bzw. Parkhäuser 24 angezeigt.

Nunmehr soll kurz die Funktion der bereits erwähnten Default-Taste 15 beschrieben werden. Bei Betätigung dieser Taste erfolgt eine "Deaktivierung" von mit der digitalen Karte jeweils verknüpften Funktionen einer angewählten Funktionsgruppe. Es erfolgt somit lediglich die Darstellung einer "Basiskarte", welche in hohem Maße der Karte heutiger Navigationssysteme entspricht und unter anderem folgende Informationen enthält:
Darstellung der eigenen Fahrzeugposition, Darstellung und Benennung der aktuell befahrenen Straße, Darstellung des Routenverlaufs (sofern vorhanden), Darstellung lokaler Landmarken (markanter Punkte bzw. Gebäude) entlang der Route, Darstellung der umliegenden und angrenzenden Straßen, der umliegenden Gebiete sowie Grünflächen. Die Darstellung erfolgt mit einem Zoomgrad Z in den Stufen 5 und 6, teilweise auch 4.

Bei erneuter Anwahl beispielsweise der Funktionsgruppe FG1 beispielsweise durch die mit dieser Funktionsgruppe belegten Favoritentaste 12 würde wieder zu einer Kartendarstellung K mit den entsprechenden Darstellungsparametern (insbesondere Zoomgrad Z und Neigungsgrad N in Stufe 1) gewechselt.

Die Tasten 12 bis 15 sind dabei vorzugsweise in der Art von "Radiotasten" ausgelegt, so dass die Aktivierung einer Taste zur Desaktivierung der anderen Taste, genauer gesagt zur Desaktivierung der mit der andren Taste bereits aktivierten Funktionsgruppe bzw. Interaktionsebene führt. Auf diese Weise wird sichergestellt, dass immer nur eine Interaktionsebene aktivierbar ist.
Zugleich sind die Tasten 12 bis 15 als "Checkboxen", also derart ausgeführt, dass eine erneute Betätigung die Aktivierung einer ausgewählten Funktionsgruppe wieder rückgängig macht.

Schließlich sei noch angemerkt, dass bestimmte Einstellungen, die innerhalb einer Funktionsgruppe vorgenommen werden auch zu einer permanenten Anzeige von zusätzlichen Informationen in der "Basiskarte" führen können. Dies kann beispielsweise bei Auswahl eines Ziels oder Parkplatzes oder anderer POIs erfolgen.

Des Weiteren ist es auch denkbar, dass bei bestimmten Funktionsgruppen bzw. Interaktionsebenen Hinweise automatisch vom System aktiviert und auf dem Touchscreen 11 dargestellt werden. Die Darstellung eines solchen Hinweises kann beispielsweise als räumlich begrenztes Fenster neben dem der Funktionsgruppe zugeordneten Schalter bzw. Symbol auf dem Display erscheinen. Beispielsweise könnte nach Freigabe einer Parkstelle durch einen anderen Verkehrsteilnehmer, dessen Fahrzeug über ein geeignetes Fahrzeugkommunikationssystem mit dem eigenen Fahrzeug verbunden ist, eine entsprechende Nachricht auf dem Touchscreen 11 angezeigt werden. Als ein anderes Beispiel wäre denkbar, bei Unterschreitung eines definierten Minimums der Tankfüllung bzw. des Batterieladestatus diese Information auf der digitalen Karte einzublenden.

Wie bereits erwähnt, können durch Betätigung der Menütaste 16 die vom Nutzer auswählbaren Funktionsgruppen bzw. Interaktionsebenen angezeigt werden. Über dieses Menü ist zudem der Zugriff auf weitere, noch nicht vom Nutzer erworbene Funktionsgruppen bzw. Interaktionsebenen denkbar. Solche zusätzlichen Funktionsgruppen bzw. Interaktionsebenen könnten in Form von kleinen Programmen, so genannten Apps (Applications) erworben werden, ähnlich wie es heutzutage bereits bei Smartphones möglich ist. Der Erwerb von solchen Apps könnte beispielsweise durch folgende Methoden möglich sein:
a) Anzeige eines Schaltsymbols, bei dessen Betätigung zu einem Online-Angebot (App-Store oder Ähnliches) verlinkt wird
b) Anzeige von zusätzlichen Schaltsymbolen für mögliche Funktionsgruppen bzw. Interaktionsebenen, bei deren Anwahl durch den Nutzer ein Dialog zum Erwerb dieser Ebenen aufgerufen wird.

Dabei versteht es sich von selbst, dass nach dem Erwerb solcher zusätzlichen Funktionsgruppen diese dem Nutzer permanent zur Verfügung stehen und sowohl über das Auswahlmenü (Menütaste 16) auswählbar als auch den Favoritentasten 12 bis 14 in beschriebener Weise zuordenbar sind.

Bei Auswahl einer Funktionsgruppe bzw. Interaktionsebene werden also ein oder mehrere Parameter der Kartendarstellung jeweils so angepasst, dass die Kartendarstellung zur jeweils möglichen Funktionsauswahl gut geeignet ist. Dabei sind die entsprechenden (unter Umständen einstellbaren) Parameter in Verbindung mit einer Interaktionsebene jeweils gespeichert und werden bei deren Aktivierung zur Steuerung der Kartendarstellung weitergegeben. Es erfolgt im Rahmen der Erfindung also eine Verknüpfung von bestimmten Funktionsbereichen bzw. Interaktionsebenen mit Darstellungsparametern der digitalen Karte.

### Bezugszeichenliste

- 1: Anzeige- und Bedienvorrichtung
- 10: Gehäuse
- 11: Touchscreen
- 12: frei belegbare Favoritentaste
- 13: frei belegbare Favoritentaste
- 14: frei belegbare Favoritentaste
- 15: Default-Taste
- 16: Menü-Taste
- 17: Audio-Tasten (Radio)
- 18: Audio-Tasten (CD, Aux)
- 19: Netzschalter
- 20: eigene Zielroute
- 21: Fahrzeugcursor
- 22: Tankstellen (POI)
- 23: Parkplätze (POI)
- 24: Parkhäuser (POI)
- F1-Fn: auswählbare bzw. aktivierbare Funktionen
- FG1-FGn: zu Funktionsgruppen (Interaktionsebenen) zusammengefasste Funktionen
- K-Kⁿ': digitale Karte mit bestimmten Darstellungsparametern (Zoom-, Neigungs- und Detaillierungsgrad)
- D: Detaillierungsgrad
- N: Neigungsgrad
- Z: Zoomgrad

## Patentansprüche

1. Anzeige- und Bedienvorrichtung (1) in einem Kraftfahrzeug, welche zumindest zur Anzeige von Informationen verschiedener Fahrerassistenzsysteme und zur Auswahl von diesen Fahrerassistenzsystemen zugeordneten Funktionen (F1-F3, F4-F7, F8, F9-Fn) nutzbar ist, wobei die Anzeige- und Bedienvorrichtung (1) zumindest einen Betriebsmodus aufweist, in dem auf der Anzeige- und Bedienvorrichtung (1) auswählbare Funktionsgruppen (FG1-FGn) angezeigt sind, wobei den Funktionsgruppen (FG1-FGn) jeweils mehrere, einem der Fahrerassistenzsysteme zugeordnete und auswählbare Funktionen (F1-F3, F4-F7, F8, F9-Fn) zugeordnet sind, wobei jede Funktionsgruppe (FG1-FGn) einer Kartendarstellung (K, K', K". Kn') zugeordnet ist, und sich die Kartendarstellungen (K, K', K", Kn') jeweils im Wert wenigstens einer ihrer Darstellungsparameter, nämlich im Zoomgrad (Z), im Neigungsgrad (N) und/oder im Detaillierungsgrad (D) unterscheiden, derart, dass nach jeder Auswahl einer der Funktionsgruppen (FG1, FG2, FG3 oder FGn) eine digitale Kartendarstellung (K, K', K" oder Kn') mit bestimmten Darstellungsparametern, nämlich mit einem bestimmten Zoomgrad (Z), einem bestimmten Neigungsgrad (N) und einem bestimmten Detaillierungsgrad (D) angezeigt wird und nach der Auswahl der Funktionsgruppe (FG1, FG2, FG3 oder FGn) Funktionen (F1-F3, F4-F7, F8 oder F9-Fn) aus der ausgewählten Funktionsgruppe (FG1, FG2, FG3 oder FGn) auswählbar sind, wobei eine Anwahl einer anderen, in dem zumindest einen Betriebsmodus zuvor angezeigten Funktionsgruppe (FG1, FG2, FG3 oder FGn) möglich ist und nach einer Anwahl einer solchen anderen Funktionsgruppe (FG1, FG2, FG3 oder FGn) gleichzeitig auswählbare Funktionen (F1-F3, F4-F7, F8 oder F9-Fn) dieser anderen Funktionsgruppe (FG1, FG2, FG3 oder FGn) angezeigt werden und die Anwahl einer solchen anderen Funktionsgruppe (FG1, FG2, FG3 oder FGn) zu einer Änderung wenigstens eines Darstellungsparameters, nämlich des Zoomgrades (Z), des Neigungsgrades (N) und/oder des Detaillierungsgrades (D) der digitalen Kartendarstellung (z.B. zu K, K', K" oder Kn') führt, wobei den in dem zumindest einen Betriebsmodus auswählbaren Funktionsgruppen (FG1 bis FG6) jeweils Schalter zugeordnet sind, welche als Schaltflächen auf einem Touchscreen (11) ausgebildet, durch Betätigung einer hardwaremäßig ausgebildeten Menü-Taste (16) auf dem Touchscreen (11) darstellbar und durch Berührung aktivierbar sind, wobei den Funktionsgruppen (FG1 bis FG6) zusätzlich als frei belegbare Favoriten-Tasten (12 bis 14) ausgebildete Schalter zuordenbar sind, deren Belegung durch eine Drag&Drop-Funktion erfolgt.

2. Anzeige- und Bedienvorrichtung (1) nach Anspruch 1, **dadurch gekennzeichnet, dass** die jeweils auswählbaren Funktionen (z.B. F1 bis F3 oder F4 bis F7) einer Funktionsgruppe (z.B. FG1 oder FG2) durch auf dem Touchscreen (11) dargestellte Schaltflächen aktivierbar sind.

## Claims

1. Display and operator control apparatus (1) in a motor vehicle, which is able to be used at least for displaying information of different driver assistance systems and for selecting functions (F1-F3, F4-F7, F8, F9-Fn) associated with these driver assistance systems, wherein the display and operator control apparatus (1) has at least one mode of operation in which the display and operator control apparatus (1) displays selectable function groups (FG1-FGn), wherein the function groups (FG1-FGn) each have multiple associated selectable functions (F1-F3, F4-F7, F8, F9-Fn) associated with one of the driver assistance systems, wherein each function group (FG1-FGn) is associated with a map depiction (K, K', K", Kn') and the map depictions (K, K', K", Kn') each differ in the value of at least one of their depiction parameters, namely in the zoom level (Z), in the inclination level (N) and/or in the level of detailing (D), such that after each selection of one of the function groups (FG1, FG2, FG3 or FGn) a digital map depiction (K, K', K" or Kn') having particular depiction parameters, namely having a particular zoom level (Z), a particular inclination level (N) and a particular level of detailing (D), is displayed and after the selection of the function group (FG1, FG2, FG3 or FGn) functions (F1-F3, F4-F7, F8 or F9-Fn) from the selected function group (FG1, FG2, FG3 or FGn) are selectable, wherein another function group (FG1, FG2, FG3 or FGn) displayed in the at least one mode of operation beforehand can be called up and after another function group (FG1, FG2, FG3 or FGn) of this kind is called up simultaneously selectable functions (F1-F3, F4-F7, F8 or F9-Fn) of this other function group (FG1, FG2, FG3 or FGn) are displayed and the calling-up of another function group (FG1, FG2, FG3 or FGn) of this kind leads to a change in at least one depiction parameter, namely in the zoom level (Z), in the inclination level (N) and/or in the level of detailing (D), of the digital map depiction (e.g. to K, K', K" or Kn'), wherein the function groups (FG1 to FG6) selectable in the at least one mode of operation each have associated switches that are in the form of buttons on a touchscreen (11), are depictable on the touchscreen (11) by virtue of operation of a menu key (16) in hardware form and are activable by touch, wherein switches that are in the form of user-assignable favourites keys (12 to 14) and whose assignment is made by means of a drag & drop function are additionally associable with the function groups (FG1 to FG6).

2. Display and operator control apparatus (1) according to Claim 1, **characterized in that** the respective selectable functions (e.g. F1 to F3 or F4 to F7) of a function group (e.g. FG1 or FG2) are activable by means of buttons depicted on the touchscreen (11).

## Revendications

1. Dispositif d'affichage et de commande (1) dans un véhicule automobile, lequel peut être utilisé au moins pour afficher des informations de différents systèmes d'assistance au conducteur et pour sélection des fonctions (F1-F3, F4-F7, F8, F9-Fn) associées à ces systèmes d'assistance au conducteur, le dispositif d'affichage et de commande (1) possédant au moins un mode de fonctionnement dans lequel des groupes de fonctions (FG1-FGn) pouvant être sélectionnés sont affichés sur le dispositif d'affichage et de commande (1), plusieurs fonctions (F1-F3, F4-F7, F8, F9-Fn) sélectionnables associées à l'un des systèmes d'assistance au conducteur étant à chaque fois associées aux groupes de fonctions (FG1-FGn),
une représentation cartographique (K, K', K". Kn') étant associée à chaque groupe de fonctions (FG1-FGn) et les représentations cartographiques (K, K', K", Kn') se différenciant respectivement par la valeur d'au moins l'un de leurs paramètres de représentation, à savoir un niveau de grossissement (Z), un degré d'inclinaison (N) et/ou un degré de représentation détaillée (D), de telle sorte qu'après chaque sélection de l'un des groupes de fonctions (FG1, FG2, FG3 ou FGn), une représentation cartographique (K, K', K" ou Kn') numérique ayant des paramètres de représentation donnés soit affichée, à savoir avec un niveau de grossissement (Z) donné, un degré d'inclinaison (N) donné et/ou un degré de représentation détaillée (D) donné et, après la sélection du groupe de fonctions (FG1, FG2, FG3 ou FGn), des fonctions (F1-F3, F4-F7, F8 ou F9-Fn) peuvent être sélectionnées à partir du groupe de fonctions (FG1, FG2, FG3 ou FGn) sélectionné, une sélection d'un autre groupe de fonctions (FG1, FG2, FG3 ou FGn) affiché précédemment dans l'au moins un mode de fonctionnement étant possible et, après une sélection d'un tel autre groupe de fonctions (FG1, FG2, FG3 ou FGn), des fonctions (F1-F3, F4-F7, F8 ou F9-Fn) pouvant être sélectionnées simultanément de cet autre groupe de fonctions (FG1, FG2, FG3 ou FGn) étant affichées et la sélection d'un tel autre groupe de fonctions (FG1, FG2, FG3 ou FGn) entraînant une modification d'au moins un paramètre de représentation, à savoir du niveau de grossissement (Z), du degré d'inclinaison (N) et/ou du degré de représentation détaillée (D) de la représentation cartographique (par exemple K, K', K" ou Kn') numérique, des commutateurs étant respectivement associés aux groupes de fonctions (FG1 à FG6) qui peuvent être sélectionnés dans l'au moins un mode de fonctionnement, lesquels sont réalisés sous la forme de boutons sur un écran tactile (11), peuvent être représentés sur l'écran tactile (11) en actionnant une touche de menu (16) réalisée sous forme matérielle et peuvent être activés par effleurement, des commutateurs réalisés sous la forme de touches de favoris (12 à 14) à affectation libre pouvant en plus être associés aux groupes de fonctions (FG1 à FG6), dont l'affectation s'effectue par le biais d'une fonction Glisser/Déposer.

2. Dispositif d'affichage et de commande (1) selon la revendication 1, **caractérisé en ce que** les fonctions qui peuvent respectivement être sélectionnées (par exemple F1 à F3 ou F4 à F7) d'un groupe de fonctions (par exemple FG1 ou FG2) peuvent être activées par le biais des boutons représentés sur l'écran tactile (11).
